(19) Europäisches Patentamt
European Patent Office
Office européen des brevets

(11) Veröffentlichungsnummer: **0 017 986**
**B1**

(12) **EUROPÄISCHE PATENTSCHRIFT**

(45) Veröffentlichungstag der Patentschrift: **15.12.82**

(21) Anmeldenummer: **80102059.5**

(22) Anmeldetag: **17.04.80**

(51) Int. Cl.³: **C 08 F218/08**, C 08 F220/18, C 09 J 3/14

(54) **Copolymerisate von Acrylestern, Vinylacetat und Äthylen, Verfahren zu deren Herstellung und deren Verwendung als Haftkleber.**

(30) Priorität: **19.04.79 DE 2915887**

(43) Veröffentlichungstag der Anmeldung: **29.10.80 (Patentblatt 80/22)**

(45) Bekanntmachung des Hinweises auf die Patenterteilung: **15.12.82 Patentblatt 82/50**

(84) Benannte Vertragsstaaten: **BE CH DE FR GB IT LI NL SE**

(56) Entgegenhaltungen:
**DE A 1 594 207**
**DE A 2 140 721**

(73) Patentinhaber: **WACKER-CHEMIE GMBH**
**Prinzregentenstrasse 22**
**D-8000 München 22 (DE)**

(72) Erfinder: **Wiest, Hubert, Dr.**
**Schweitzer Strasse 6**
**D-8263 Burghausen (DE)**
Erfinder: **Weissgerber, Rudolf, Dr.**
**Gluckstrasse 2**
**D-8263 Burghausen (DE)**
Erfinder: **Lieb, Erwin**
**Glonner Strasse 2**
**D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 017 986 B1

Jouve, 18, rue St-Denis, 75001 Paris, France

# Copolymerisate von Acrylestern, Vinylacetat und Äthylen, Verfahren zu deren Herstellung und deren Verwendung als Haftkleber

Es sind zahlreiche Copolymerisate mit den verschiedensten Zusammensetzungen und mit den verschiedensten Anwendungen bekannt. Je nachdem, welche der vielen bekannten Monomeren copolymerisiert werden, kann das Eigenschaftsbild der entstehenden Polymeren beeinflußt werden. Dabei spielt auch die Menge, in der die einzelnen Monomeren im Verhältnis zu anderen Monomeren eingesetzt werden, eine entscheidende Rolle. Bekannt sind beispielsweise Äthylenvinylester-, Äthylenacrylestercopolymerisate sowie auch Terpolymere verschiedener Zusammensetzung. Typische Verwendungsgebiete solcher Produkte sind Textilappreturen, Papierbeschichtungen, Bindemittel für Anstriche und Klebstoffe. Bei der Verwendung von Äthylenvinylacetat- und Äthylenacrylestercopolymerisaten als Haftkleber ist es notwendig, zusätzlich klebrigmachende Harze einzusetzen. Solche Kombinationen neigen jedoch zum Altern und Verspröden und zum Abwandern des klebrigmachenden Anteils in poröse Substrate.

Aufgabe der vorliegenden Erfindung war es, aus der Vielzahl von bekannten Monomeren ein genau definiertes neues Copolymerisat zu finden, welches insbesondere gute Eigenschaften bei der Verwendung als Haftkleber aufzeigt.

Erfindungsgegenstand ist ein Copolymerisat aus

a) 10 -30 Gew.% Äthylen,
b) 30 -69 Gew.% Acrylsäureester von Alkoholen mit 4 bis 12 Kohlenstoffatomen,
c) 20 -55 Gew.% Vinylacetat,
d) 0,5- 8 Gew.% Monomere der allgem. Formel

$$CH_2 = CR' - \overset{\overset{\displaystyle O}{\|}}{C} - N(R'')_2$$

wobei
R' = H oder $CH_3$
R" = H oder Alkyl mit $C_1$-$C_3$, ggf. substituiert, ist
e) 0 - 8 Gew.% weiterer olefinisch ungesättigter Monomerer, wie sie nachstehend erläutert werden, mit einer Glasübergangstemperatur von – 20 bis – 60 °C und einem K-Wert nach Fikentscher, gemessen in Tetrahydrofuran, von 50 bis 180.

Ein weiterer Gegenstand der Erfindung ist ein Haftkleber enthaltend das soeben beschriebene Copolymerisat.

Ebenfalls Gegenstand der Erfindung ist eine wäßrige Haftkleberdispersion, enthaltend

40 -65 Gew.%, bezogen auf Dispersion des eben beschriebenen Copolymerisats,
1,5- 8 Gew.%, bezogen auf Copolymerisate von Emulgatoren und/oder Schutzkolloid,
34 -59 Gew.%, bezogen auf Dispersion an Wasser.

Das erfindungsgemäße Copolymerisat zeigt ein Eigenschaftsbild, welches auf eine hervorragende Eignung des Copolymerisats als Haftkleber hinweist. Insbesondere der Einfluß der Komponente d) auf das Gesamtcopolymere bringt dieses Eigenschaftsbild. Die Haftkleber aus diesen Copolymerisaten weisen eine sehr starke Kohäsion auf, d.h. ein Spalten innerhalb der Klebstoffschicht tritt nicht auf. Zudem sind die notwendigen ausgezeichneten Klebrigkeitseigenschaften und Adhäsionseigenschaften in hohem Maße vorhanden. Auch die geforderte Alterungsbeständigkeit weisen die Copolymerisate auf. Es muß als überraschend angesehen werden, daß die Einpolymerisation von geringen Mengen der Komponente d) derartig günstig auf das Gesamtcopolymere wirken.

Hergestellt werden die Copolymerisate durch radikalische Polymerisation der Komponenten b), c), d) und e) in den angegebenen Mengen unter einem Äthylendruck von 20 bis 120 bar bei 10 bis 100 °C in einem Druckgefäß. Die Polymerisation kann grundsätzlich in Masse, in Lösung, bevorzugt jedoch in wäßriger Emulsion, durchgeführt werden.

Als Komponente b) sind die Acrylester von Alkoholen mit 4 bis 12 Kohlenstoffatomen geeignet. Bevorzugt werden solche eingesetzt, die 6 bis 9 Kohlenstoffatome haben, insbesondere das wohlfeile 2-Äthylhexylacrylat. Weitere Beispiele solcher Acrylester sind Butylacrylat, Hexylacrylat, Heptylacrylat, Octylacrylat, n-Decylacrylat und Dodecylacrylat. Die verwendeten Gewichtsmengen liegen bei 30 bis 69 Gew.%, vorzugsweise bei 30 bis 60 Gew.%. Das Vinylacetat, die Komponente c), wird in Mengen von 20 bis 55 Gew.% einpolymerisiert, vorzugsweise in Mengen von 25 bis 50 Gew.%.

Die Komponente d) ist durch die allgemeine Formel definiert. Es handelt sich, chemisch gesehen, um Acrylsäure oder Methacrylsäureamide. Bevorzugt ist dabei das Acrylamid und das Methacrylamid ohne Substitutionen. Beide können jedoch an dem Stickstoff mit Alkylresten bis zu 3 Kohlenstoffatomen substituiert sein, z.B. Methyl, Äthyl, Propyl. Jedoch können diese Alkylreste auch substituiert sein.

Beispielsweise durch Hydroxylgruppen, wie $—CH_2OH$, oder Äthergruppen, wie $—CH_2OCH_3$, N-Acylgruppen, beispielsweise

$$CH_2—NH—\overset{O}{\overset{\|}{C}}—CH_3 \text{ oder } —CH_2—NH—\overset{O}{\overset{\|}{C}}—CH=CH_2$$

Von den beiden Wasserstoffen am Acrylamid oder am Methacrylamid ist bevorzugt nur einer substituiert. Generell können jedoch beide substituiert sein und zwar mit gleichen oder verschiedenen Substituenten. Die eingesetzten Mengen sind üblicherweise 0,5 bis 8 Gew.%, vorzugsweise 1,5 bis 6 Gew.%.

Die Komponenten b), c) und d) polymerisieren praktisch quantitativ in das Copolymerisat ein, so daß ihre eingesetzte Menge voll im Copolymerisat wiederzufinden ist. Die Menge der Komponente a), das Äthylen, wird durch die Anwendung des Drucks gesteuert. Es werden Drücke zwischen 20 und 120 bar eingesetzt.

Zu diesen vier bisher beschriebenen Monomeren können auch weitere Monomere (Komponente e)) eingesetzt werden. Diese weiteren Monomeren lassen sich in drei wesentliche Gruppen teilen. Zum einen kommen mit Wasser in beliebigem Verhältnis mischbare Monomere in Frage. Bevorzugt sind dabei α, β-ungesättigte Carbonsäuren, insbesondere Acrylsäure und Methacrylsäure bzw. deren Salze. Auch Crotonsäure kann in diesem Zusammenhang verwendet werden. Weitere Beispiele für wasserlösliche Monomere sind Vinylsulfonsäure und ihre Salze, N-Vinyl-N-Methylacetamid und vorzugsweise N-Vinylpyrrolidon. Die zweite Gruppe der Monomeren als Komponente e) sind mehrfach olefinisch ungesättigte Monomere, wie z.B. Diallyladipat, Triallylcyanurat, Butandioldiacrylat und Allyl(meth)acrylat. Sie werden vorzugsweise in Mengen von 0 bis 2 % verwendet. Als dritte Gruppe der Komponente e) seien monomerlösliche Monomere erwähnt. Beispiele sind Vinyläther, Styrol, Methacrylat, z.B. Methylmethacrylat, Glycidyl(meth)acrylat, Hydroxyäthylacrylat und Hydroxypropylacrylat, Vinylchlorid und Vinylidenchlorid. Die Monomeren e) werden in Mengen von 0 bis 8 Gew.% im allgemeinen verwendet. Es sind damit keine Monomeren gemeint, die bereits unter a) bis d) aufgeführt sind.

Die Polymerisation wird in üblichen Druckgefäßen durchgeführt. Die Monomeren können dabei insgesamt vorgelegt werden oder nur teilweise vorgelegt und der Rest dosiert werden. Bevorzugt werden Comonomere, wie die Acrylester, die rasch in das Polymere eingebaut werden, verzögert dosiert. Der Äthylendruck in Höhe von 20 bis 120 bar kann über die ganze Polymerisation konstantgehalten werden unter Nachpressen von Äthylen oder er kann variiert werden. Diese generellen Maßnahmen gelten für alle Polymerisationsarten.

Bei der Lösungspolymerisation kommen Lösungsmittel in Frage, wie z.B. Alkohole mit 1 bis 5 Kohlenstoffatomen, Ester, Ketone, Toluol, Xylol, flüssige Kohlenwasserstoffe sowie deren Gemische.

Als Radikalbildner (0,05 bis 3 Gew.%) seien in diesem Zusammenhang Azo- oder Peroxidverbindungen genannt, z.B. Azoisobutyronitril, Laurylperoxid, t.-Butylhydroperoxid, t.-Butylperpivalat, Benzoylperoxid, Diisopropylperoxidicarbonat sowie auch Redoxsysteme, die zusätzlich ein Reduktionsmittel, wie Amine, Hydrazine oder Sulfinsäuren enthalten. Die gleichen Radikalbildner sind auch für die Masse-Polymerisation von Bedeutung.

Bevorzugt ist jedoch die Herstellung des Copolymerisats durch Polymerisation der Komponenten b) bis e) in den angegebenen Mengen in wäßriger Emulsion in Gegenwart von 1,5 bis 8 Gew.% Emulgatoren und/oder Schutzkolloiden sowie Radikalbildner unter einen Äthylendruck von 20 bis 120 bar und einer Temperatur von 10 bis 90 °C in einem Druckgefäß.

Bei dieser Emulsionspolymerisation wird bevorzugt die Komponente d) vor Beginn der Polymerisation im Druckgefäß insgesamt vorgelegt.

Die Dispersionen besitzen im allgemeinen einen Festgehalt von 40 bis 65 Gew.%. Dispergiermittel können alle üblicherweise bei der Emulsionspolymerisation verwendeten Emulgatoren und Schutzkolloide sein. Dabei ist es möglich, Schutzkolloide allein, Emulgatoren allein und auch Gemische aus Emulgatoren mit Schutzkolloiden zu verwenden. Die Gesamtmenge beträgt dabei meistenteils 1,5 bis 8 Gew.%, bezogen auf Polymeres. Als Beispiele der Schutzkolloide seien genannt: Polyvinylalkohol, teilacetylierte Polyvinylalkohole, wasserlösliche Cellulosederivate, wie Hydroxyäthyl-, Hydroxypropyl-, Methyl- oder Carboxymethylcellulosen, wasserlösliche Stärkeäther, Polyacrylsäure oder wasserlösliche Polyacrylsäurecopolymerisate mit (Meth)acrylamid und/oder Acrylestern, Poly-N-Vinylverbindungen von offenkettigen oder cyclischen Carbonsäureamiden. Die Mengen betragen im allgemeinen 1,5 bis 6 Gew.%, bezogen auf Polymerisat.

Als Emulgatoren können anionische, kationische und nichtionogene Netzmittel eingesetzt werden in Mengen von 1,5 bis 6 Gew.%, bezogen auf Polymerisat. Geeignete anionische Emulgatoren sind z.B. Alkylsulfonate, Alkylarylsulfonate, Alkylsulfate, Sulfate von Hydroxyalkanolen, Alkyl- und Alkylarylisulfonate, sulfonierte Fettsäuren, Sulfate und Phosphate von Alkyl- und Alkylarylpolyäthoxyalkanolen sowie Sulfobernsteinsäureester. Als kationische Emulgatoren sind z.B. Alkylammonium-, Alkylphosphonium- und Alkylsulfoniumsalze anwendbar.

Beispiele für geeignete nichtionische Emulgatoren sind Additionsprodukte von 5 bis 50 Mol Äthylenoxid an gerad- und verzweigtkettige Alkylalkohole mit 6 bis 22 Kohlenstoffatomen , an Alkylphenole, an Carbonsäure, an Carbonsäureamide, an primäre und sekundäre Amine sowie Blockcopolymerisate von Propylenoxid mit Äthylenoxid.

Bevorzugt werden als Emulgiermittel nichtionogene und/oder anionische Emulgatoren in Mengen von 1,5 bis 6 Gew.%, auf Polymerisat bezogen, allein oder in Mischung mit Schutzkolloiden, bevorzugt 0,5 bis 4 Gew.%, verwendet. Die Dispergiermittel können dosiert sowie auch vorgelegt werden.

Der pH-Wert während der Polymerisation wird zwischen pH 2 und 7, bevorzugt pH 3 bis 5, gehalten. Dafür können Säuren, wie z.B. Ameisensäure, Essigsäure, Salzsäure, Schwefelsäure, oder Basen, wie z.B. Ammoniak, Amine, Natronlauge, Kalilauge, Calciumhydroxid, oder üblich Puffersalze, z.B. Alkaliacetate, Alkalicarbonate, Alkaliphosphate, zugegeben werden.

Als Radikalbildner werden die gebräuchlichen völlig oder Teilweise wasserlöslichen Katalysatoren, insbesondere Peroxidverbindungen in Mengen von 0,02 bis 2 Gew.%, bezogen auf Monomere, verwendet. Beispiele solcher Radikalbildner sind Wasserstoffperoxid, Natrium-, Kalium- und Ammoniumpersulfat sowie tert.-Butylhydroperoxid, Azo-bis-(2-amidinpropan)hydrochlorid, oder Azo-bis-(2-cyanovaleriansäure). Sie können allein oder zusammen mit Reduktionsmitteln in Mengen von 0,02 bis 2 Gew.%, bezogen auf Monomere, wie z.B. Formaldehydnatriumsulfoxylat, Eisen-II-Salzen, Natriumdithionit, Natriumhydrogensulfit, Natriumsulfit, Natriumthiosulfat oder Aminen als Redoxkatalysatoren verwendet werden.

Weiterhin ist das in der DE-PS 1 133 130 und der DE-PS 1 745 567 beschriebene Redoxkatalysatorsystem, das aus Edelmetallsolen der VIII. Gruppe des Periodensystems der Elemente und anorganischen oder organischen Peroxiden sowie Wasserstoff als Reduktionsmittel und ggf. Schwermetallionen besteht, geeignet.

Bevorzugt werden Redoxkatalysatoren verwendet. Die Radikalbildner können ganz oder teilweise zu Beginn der Polymerisation vorgelegt und der Rest dosiert werden. Bevorzugt werden eine oder beide der Redoxkatalysatorkomponenten während der Polymerisation zudosiert.

Zur Regelung des Molekulargewichtes können bei der Polymerisation bekannte Polymerisationsregler, z.B. Merkaptane, Aldehyde oder Chlorkohlenwasserstoffe, zugesetzt werden.

Das Hauptanwendungsgebiet der erfindungsgemäßen Copolymerisate liegt in der Verwendung als Haftkleber. Haftkleber, vielfach auch als druckempfindliche Klebstoffe bezeichnet, werden meistenteils auf verschiedenste Trägermaterialien aufgebracht und in Form von selbstklebenden Materialien, wie z.B. Klebebändern oder Klebefolien, verwendet. Er müß die Eigenschaften der Klebirgkeit, Kohäsion und Adhäsion in möglichst hohem Maße in sich vereinigen. Dabei muß er auf verschiedensten Substraten bereits bei leichtem Fingerdruck anhaften und sich vom verklebten Substrat ohne Zurückbleiben von Klebstoffresten, in manchen Fällen auch unter Zerstörung des Substrats, wieder ablösen lassen. Zudem ist Alterungsstabilität gefordert. Die erfindungsgemäßen Copolymerisate weisen diese Eigenschaften in hohem Maße auf. Sie können sowohl in Masse wie in organischen Lösungsmitteln gelöst, wie auch in wäßriger Emulsion als Haftkleber eingesetzt werden. Ein Zumischen von üblichen Zusätzen bis zu 50 % des Copolymeren ist oftmals sinnvoll. Beispiele solcher Zusätze sind Füllstoffe, Pigmente, Weichmacher und Harze. Beispiele für in Frage kommende Füllstoffe sind Kreiden, Leicht- und Schwerspat, feine Kaolinsorten, Glimmermehle und Talkumtypen. Als Pigmente können z.B. eingesetzt werden Titandioxid, Zinkweiß und Lithopone. Brauchbare Weichmacher sind z.B. Diester der Phthalsäure mit Alkoholen mit 4 bis 13 Kohlenstoffatomen, vorzugsweise mit 4 bis 8 Kohlenstoffatomen, außerdem Diester der Sebacinsäure bzw. der Adipinsäure mit Alkoholen mit 6 bis 10 Kohlenstoffatomen und Triester der Phosphorsäure mit Alkoholen mit 6 bis 10 Kohlenstoffatomen.

Als Harze kommen z.B. in Frage Kolophonium und Kolophoniumderivate, Tallharze, Kohlenwasserstoffharze, Polyterpenharze und Cumaron-Inden-Harze.

Als Anwendungsgebiete seien Klebebänder, Klebefolien, selbsthaftende Teppichböden- und Polyvinylchloridfußbödenbeläge, selbstklebende Etiketten, selbsthaftende Montageteile, wie Zierleisten und Haken genannt.

In den folgenden Beispielen werden Angaben über den Tack (Oberflächenklebrigkeit), Schälfestigkeit (Klebkraft) und Scherstandfestigkeit (Kohäsion) von mit den erfindungsgemäßen Dispersionen hergestellten haftklebenden Beschichtungen gemacht.

Unter dem mehrmals benutzten Ausdruck « Klebestreifen » werden Streifen aus flexiblem, folienartigem Trägermaterial, beschichtet mit einem Film aus einer erfindungsgemäßen Dispersion verstanden.

Den zahlenmäßigen Angaben liegen folgende Bestimmungsmethoden zugrunde :

a) Tack (Oberflächenklebrigkeit) :

Ein 20 cm langer und 2,5 cm breiter Klebestreifen (Trägermaterial : polymerweichmacherhaltiges PVC, 0,1 mm dick) wird in Form einer « Schlaufe » senkrecht hängend mit der Klebstoffschicht nach außen in den oberen Backen einer Zugprüfmaschine eingespannt. Anschließend wird die « Schlaufe » durch Zusammenfahren der beiden Backen der Zugprüfmaschine senkrecht mit einer Geschwindigkeit von 100 mm/Minute auf eine waagrecht befestigte, sorgfältig gereinigte Glasplatte ohne Druckanwendung in einer Länge von etwa 3 cm aufgelegt. Danach erfolgt sofort mit gleicher Geschwindigkeit der Abzug des Klebestreifens von der Glasoberfläche. Die höchste für das Abziehen der « Schlaufe » benötigte Kraft wird als Maß für die Oberflächenklebrigkeit hergenommen.

Der angegebene Wert ist der Mittelwert aus 5 Einzelmessungen, wobei jedesmal ein frischer Klebestreifen und eine frische Glasoberfläche verwendet werden.

b) Schälfestigkeit (Klebkraft) :

Ein 20 cm langer und 2,5 cm breiter Klebestreifen wird von einem Ende ausgehend in einer Länge von ca. 12 cm auf eine sorgfältig gereinigte Stahlplatte aus V4A blasenfrei aufgelegt. Durch 5-maliges

Walzen (hin und her) mit einer 2,2 kg schweren, mit Silikongummi überzogenen Stahlwalze wird der Klebestreifen angedrückt. Nach 8-minütiger bzw. 24-stündiger Lagerung im Klimaraum bei 23 °C und 50 % relativer Luftfeuchtigkeit wird der Klebestreifen mit einer Geschwindigkeit von 78 mm/Minute im 180°-Winkel über eine Länge von 5 cm abgezogen. Die dazu benötigte durchschnittliche Kraft wird gemessen. Die angegebenen Werte sind Mittelwerte aus jeweils 5 Einzelmessungen.

c) Scherstandfestigkeit (Kohäsion) :

Ein 5 cm langer und 2,5 cm breiter Klebestreifen wird mit einer Fläche von 2,5 cm × 2,5 cm so auf eine sorgfältig gereinigte Glasplatte blasenfrei aufgelegt, daß das restliche Stück des Klebestreifens über den Rand der Glasplatte hinausragt. Der Streifen wird durch Anwalzen (5 mal hin und her) mit einer mit Silikongummi überzogenen 2,2 kg schweren Stahlwalze angedrückt. Nach einer Verklebungszeit von 8 Minuten wird die Glasplatte so in einem Winkel von 2° zur Senkrechten (um Schälkräfte sicher auszuschließen) in einer Halterung befestigt, daß das freie Ende des Klebestreifens nach unten ragt. An diesem Ende wird ein Gewicht von 2 kg frei hängend befestigt. Das freie Ende des Klebestreifens und die Rückseite der Glasplatte schließen einen Winkel von 178° ein. Gemessen wird die Zeit bis sich der Klebestreifen unter dem Zug des Gewichtes von der Glasplatte löst. Die Messung wird im Klimaraum bei 23 °C und 50 % relativer Luftfeuchtigkeit durchgeführt. Die angegebenen Werte sind Mittelwerte aus jeweils 3 Einzelmessungen.

Die geprüften Klebstoffdispersionen wurden für alle Messungen mit einem Rakel in einer solchen Dicke auf die verschiedenen Trägerfolien aufgezogen, daß nach dem Trocknen eine gleichmäßige Polymerisatschicht von 24 bis 26 g/m$^2$ zurückblieb.

Die Reinigung der bei den Untersuchungen benutzten Glasoberfläche erfolgte durch (in der angegebenen Reihenfolge) mechanisches Entfernen von sichtbaren Verschmutzungen mit Hilfe von Wasser und ggf. Reinigungsmitteln, Lagerung in frischer Chromschwefelsäure, Lagern in einem Methyläthylketon-Bad und in einem Äthanol-Bad. Analog (ohne Chromschwefelsäure) wurden V4A-Oberflächen gereinigt. Vor der Benutzung der so gereinigten Testoberflächen werden die Platten mindestens 48 Stunden im Klimaraum bei 23 °C und 50 % relativer Luftfeuchtigkeit gelagert.

Zur Bestimmung der Naßfestigkeit wurde analog zum Vorgehen bei der Schälfestigkeitsmessung ein Klebestreifen aus polymerweichmacherhaltigem PVC, 0,1 mm stark, auf V4A verklebt und nach 3-tägiger Wasserlagerung des Klebeverbundes bei Raumtemperatur die Schälfestigkeit gemessen.

## Beispiel 1

In einem 16 l Druckreaktor mit Rührung, mehreren Zudosiermöglichkeiten, Kühl- und Heizeinrichtung sowie Manometer und Temperaturmessung werden in 4 000 g Wasser 200 g Nonylphenolpolyglykoläther mit 20 Mol Äthylenoxid, 15 g Natriumdodecylbenzolsulfonat, 30 g Kaliumpersulfat, 100 g Acrylsäure und 165 g Acrylamid gelöst. nach Spülen mit Stickstoff gibt man unter Rühren 2 000 g Vinylacetat und 3 000 g 2-Äthyl-hexylacrylat zu. Nach Verdrängen des Stickstoffs mit Äthylen wird auf 50° erwärmt und Äthylen mit einem Druck von 50 bar bis zum Sättigungsgleichgewicht aufgedrückt. Durch, der Polymerisation angepaßte, Zugabe einer Lösung von 15 g Formaldehydsulfoxylatnatrium in 700 g Wasser im Verlauf von 5 Stunden wird die Polymerisation durchgeführt. Der Äthylendruck erniedrigt sich im Verlauf der Polymerisation auf 40 bar. Dann wird in einen 30 l Rührkessel entspannt und durch Rühren und leichtes Vakuum restliches Äthylen entfernt. Man erhält eine stabile Kunststoffdispersion, mit einer Viskosität von 3 000 mPa.s und einem Festgehalt von 55 %. Der K-Wert (nach Fikentscher, Cellulosechemie Bd 13, p 58, 1932 ; gemessen in 1 %-iger Tetrahydrofuranlösung) des Polymerisats beträgt 88, die Glasübergangstemperatur − 42 °C. Die Dispersion trocknet zu einem Zähen, stark klebrigen Film auf. Eine Beschichtung von 25 μ Trockenstärke auf einer 100 μ starken PVC-Folie ergab gegen V4A verklebt folgende Prüfwerte : Tack 3.9 N/2,5 cm, Schälfestigkeit nach 8 Minuten 7 und nach 24 Stunden 12 N/2,5 cm. Die Scherstandfestigkeit betrug 660 Minuten, die Naßfestigkeit 7 N/2,5 cm.

Polymerzusammensetzung :

1,6 % Acrylsäure, 2,6 % Acrylamid, 18 % Äthylen, 31,1 % Vinylacetat, 46,7 % 2-Äthylhexylacrylat.

## Beispiel 2

Es wird wie in Beispiel 1 verfahren, jedoch anstelle von 165 g Acrylamid 180 g Methacrylamid zugesetzt und ein Monomerengemisch aus 3 000 g Vinylacetat und 2 000 g Octylacrylat zugegeben. Der Äthylendruck wird auf 75 atü eingestellt und nach Polymerisationsbeginn 4 Stunden lang dabei gehalten. Man erhält eine stabile Dispersion mit einem Festgehalt von 60 %. Der K-Wert ist 67, die Glasübergangstemperatur − 48°. Die Dispersion bildet einen zähen, klebrigen Film.

Polymerzusammensetzung :

1,5 % Acrylsäure, 2,7 % Methacrylamid, 22 % Äthylen, 44,3 % Vinylacetat, 29,5 % Octylacrylat.

## Beispiel 3

Es wird wie in Beispiel 1 verfahren, jedoch ein Monomergemisch aus 2 000 g Vinylacetat und 1 000 g 2-Äthylhexylacrylat und 165 g Acrylamid vorgelegt. 15 Minuten nachdem die Polymerisation eingesetzt

hat, werden weiter 2 000 g 2-Äthylhexylacrylat im Verlauf von 2,5 Stunden konstant zudosiert. Die Dispersion ist stabil, hat einen Festgehalt von 54 %. Der K-Wert beträgt 85, die Glasübergangstemperatur – 41°. Die Dispersion trocknet zu einem zähen, sehr klebrigem Film auf.

Polymerzusammensetzung :

1,6 % Acrylsäure, 2,6 % Acrylamid, 17 % Äthylen, 31,5 % Vinylacetat, 47,3 % 2-Äthylhexylacrylat.

Eine Beschichtung von 25 µ Trockenstärke auf einer 100 µ starken PVC-Folie ergab gegen V4A Stahl verklebt folgende Prüfwerte : Tack 5.8 N/2,5 cm, Schälfestigkeit nach 8 Minuten 6 und nach 24 Stunden 17 N/2,5 cm. Die Scherstandfestigkeit betrug 420 Minuten.

## Vergleichsbeispiel

Es wird wie in Beispiel 1 verfahren, jedoch kein Acrylamid zugesetzt. Man erhält eine stabile Kunststoffdispersion mit einem Festgehalt von 55 Gew.%. Der weiche Film ist sehr klebrig. Der K-Wert des Polymerisats beträgt 91, die Glasübergangstemperatur – 45 °C.

Polymerzusammensetzung :

1,6 % Acrylsäure, 18 % Äthylen, 32,2 % Vinylacetat, 48,2 % 2-Äthylhexylacrylat.

Eine Beschichtung von 25 µ Trockenstärke auf einer 100 µ starken PVC-Folie ergab gegen V4A Stahl verklebt folgende Prüfwerte : Tack 7.4 N/2,5 cm, Schälfestigkeit nach 8 Minuten 8 und nach 24 Stunden 15 N/2,5 cm. Die Scherstandfestigkeit betrug nur 80 Minuten.

## Beispiel 4

Es wird wie in Beispiel 3 verfahren, jedoch 300 g Acrylamid vorgelegt. In der Dosierung von 2 000 g 2-Äthylhexylacrylat werden 10 g Allylmethacrylat gelöst und mitzudosiert. Man erhält eine stabile Dispersion. Die Glasübergangstemperatur ist – 40 °C. Die Dispersion trocknet zu einem zähen klebrigen Film auf.

Polymerzusammensetzung :

1,5 % Acrylsäure, 4,6 % Acrylamid, 17 % Äthylen, 30,7 % Vinylacetat, 46 % 2-Äthylhexylacrylat, 0,15 % Allymethacrylat.

## Beispiel 5

In einem Reaktionsgefäß wie in Beispiel 1 werden 4 000 g Wasser, 100 g eines Natrium-Nonylphenolpolyäthylenglykoläthersulfats mit 10 Mol Äthylenoxid, 150 g eines Tridecylpolyäthylenglykoläthers 15 Mol Äthylenoxid und 20 g Acrylamid gelöst. Nach Spülen mit Stickstoff gibt man 2 500 g Vinylacetat und 600 g Decylacrylat unter Rühren zu. Nach Verdrängen des Stickstoffs mit Äthylen wird auf 50 °C erwärmt. Äthylen wird mit einem Druck von 55 bar aufgedrückt. Die Polymerisation wird durch Beginn einer gleichzeitigen Zugabe von einer Lösung von 40 g Ammoniumpersulfat in 400 g Wasser und 20 g Natriumformaldehydsulfoxylat in 400 g Wasser, die über 4 Stunden verteilt zugegeben werden, gestartet. 15 Minuten nach Einsetzen der Polymerisation wird mit der Zudosierung von 1 900 g Decylacrylat und einer zweiten Dosierung von 180 g Acrylamid in 300 g Wasser, die innerhalb von zwei Stunden konstant zudosiert werden, begonnen. Nach 4,5 Stunden Polymerisationszeit wird abgekühlt und die Dispersion entspannt. Man erhält eine stabile Dispersion, die zu einem zähen klebrigen Film auftrocknet. Die Glasübergangstemperatur des Polymerisats ist – 53 °C, der K-Wert 85.

Polymerzusammensetzung :

3,3 % Acrylamid, 13,5 % Äthylen, 41,6 % Vinylacetat, 41 % Decylacrylat.

## Beispiel 6

In einem Reaktor wie in Beispiel 1 beschrieben, werden 3 600 g Wasser, 5 g eines Sulfobernsteinsäurehalbester-di-natriumsalzes mit einem Alkyl-($C_{12}$)-polyäthylenglykoläther mit 6 ÄO, 6 g Natriumvinylsulfonat und 100 mg Eisenammoniumsulfat gelöst und durch Spülen mit Stickstoff von Luftsauerstoff befreit. Dann werden von dem Monomerengemisch aus 2 400 g Vinylacetat und 3 600 g 2-Äthylhexylacrylat 600 g unter Rühren zugegeben, mit Äthylen der Sauerstoff verdrängt und 50 bar Äthylen aufgedrückt. Durch Zupumpen von je 50 $cm^3$ einer Lösung von 40 g Ammoniumpersulfat in 500 g Wasser und 50 $cm^3$ einer Lösung von 20 g Natriumformaldehydsulfoxylat in 500 g Wasser wird die Polymerisation gestartet. Nach dem Start werden die beiden Dosierungen mit 50 $cm^3$/Stunde weitergeführt. 20 Minuten nach dem Polymerisationsbeginn werden das übrige Monomerengemisch mit 800 $cm^3$/Stunde sowie eine Dosierung C) bestehend aus 240 g Acrylamid, 120 g eines Polyvinylalkohols mit einer Viskosität von 5 mPa.s (4 %ig) und einem Hydrolysegrad von 100, 70 g eines Natriumlaurylpolyäthylenglykoläthersulfats (mit 3 Mol ÄO), 10 $cm^3$ Ammoniak (30 %ig) in 1 000 $cm^3$ wasser mit einer Dosiergeschwindigkeit von 200 $cm^3$/Stunde zugegeben. Nach Beendigung der Dosierung der Monomeren und der Dosierung C) läßt man die restliche Menge des Redoxkatalysators innerhalb einer Stunde zufließen. 30 Minuten danach wird abgekühlt und die Dispersion, nachdem der pH-Wert mit Ammoniak auf 7 gestellt wurde, entspannt. Man erhält eine stabile Dispersion, die zu einem klebrigen Film auftrocknet. Die Glasübergangstemperatur beträgt – 41 °C.

Polymerzusammensetzung :

3,2 % Acrylamid, 18 % Äthylen, 31,5 % Vinylacetat, 47,3 % 2-Äthylhexylacrylat.

Eine Beschichtung von 25 μ Trockenstärke auf verschiedenen Folien gegen V4A Stahl verklebt ergab die in Tabelle 1 aufgeführten Verklebungswerte.

## Beispiel 7

In einem Reaktor wie in Beispiel 1 beschrieben, wurden in 4 000 g Wasser 250 g Nonylphenolpolyäthylenglykoläther mit 23 Mol Äthylenoxid, 30 g Dodecylbenzolsulfonat-Natrium, 100 g Methacrylsäure, 100 g Acrylamid und 120 g N-Vinylpyrrolidon gelöst. Nach Spülen mit Stickstoff werden 2 000 g Vinylacetat und 600 g 2-Äthylhexylacrylat zugegeben. Nach Verdrängen des Stickstoffs mit Äthylen wird auf 60° erwärmt und Äthylen mit einem Druck von 60 bar bis zum Sättigungsgleichgewicht aufgedrückt. Durch gleichzeitige Zudosierung einer Lösung von 30 g Ammoniumpersulfat in 500 ml Wasser und einer Lösung von 15 g Formaldehydsulfoxylatnatrium in 500 ml Wasser mit einer Dosiergeschwindigkeit von 150 ml/Stunde wird die Polymerisation gestartet. 15 Minuten nachdem die Polymerisation eingesetzt hat, wurden weitere 2 400 g 2-Äthylhexylacrylat im Verlauf von 2,5 Stunden gleichmäßig zudosiert. Es wird noch 1,5 Stunden bei 60° gehalten, dann in einen 30 l Rührkessel entspannt und restliches Äthylen durch leichten Unterdruck unter Rühren entfernt. Man erhält eine stabile Kunststoffdispersion mit einer Viskosität von 300 mPa.s bei einem Festgehalt von 58 %. Der Äthylengehalt des Polymeren beträgt 20 Gew.%, der K-Wert 92. Die Glasübergangstemperatur ist – 46 °C. Die Dispersion trocknet zu einem stark klebrigen Film mit guter Kohäsion auf.

Polymerzusammensetzung :

45 % 2-Äthylhexylacrylat, 30 % Vinylacetat, 20 % Äthylen, 1,5 % Acrylamid, 1,5 % Methacrylsäure, 1,9 % N-Vinylpyrrolidon.

Eine Beschichtung von 25 μ Trockenfilmstärke auf einer 100 μ starken PVC-Folie gegen $V_{4A}$ verklebt ergab folgende Prüfwerte : Tack 7,0 N/2,5 cm, Schälfestigkeit nach 8 Minuten 4 N/2,5 cm und nach 24 Stunden 9,5 N/2,5 cm. Die Scherstandfestigkeit betrug 800 Minuten, die Naßfestigkeit 7,5 N/2,5 cm.

TABELLE 1 : Beispiel 6, aufgezogen auf verschiedenen Trägerfolien

| Trägerfolie | Tack (N/2,5 cm) | Schälfestigkeit (N/2,5 cm) nach einer Verklebungszeit von 8 Min. | 24 h | Scherstandfestigkeit (Minuten) |
|---|---|---|---|---|
| PVC ; 0,1 mm monomerweichmacherhaltig | 5,3 | 6 | 18 | > 3 800 |
| PVC ; 0,1 mm polymerweichmacherhaltig | 3,3 | 5 | 8 | > 1 000 |
| Polyester 0,036 mm | 3,5 | 4 | 7 | > 1 000 |
| Polypropylen 0,03 mm | 4,1 | 5 | 8 | > 1 000 |

## Ansprüche

1. Copolymerisat aus

a) 10 -30 Gew.% Äthylen,
b) 30 -69 Gew.% Acrylsäureester von Alkoholen mit 4 bis 12 Kohlenstoffatomen,
c) 20 -55 Gew.% Vinylacetat,
d) 0,5- 8 Gew.% Monomeren der allgem. Formel

$$CH_2 = CR' - \overset{O}{\overset{\|}{C}} - N(R'')_2$$

wobei

R' = H oder $CH_3$

R" = H oder Alkyl mit 1 bis 3 Kohlenstoffatomen, ggf. substituiert, ist

e) 0 - 8 Gew.% weiterer olefinisch ungesättigter und mit Wasser in beliebigem Verhältnis mischbarer oder monomerlöslicher oder mehrfach olefinisch ungesättigter Monomeren mit einer Glasübergangstemperatur von – 20 bis – 60 °C und einem K-Wert nach Fikentscher, gemessen in Tetrahydrofuran, von 50 bis 180.

2. Copolymerisate entsprechend Anspruch 1, dadurch gekennzeichnet, daß die Komponente d) Acrylamid oder Methacrylamid ist.

3. Verwendung von Copolymerisate entsprechend Anspruch 1 oder 2 in Haftklebern.

4. Wäßrige Haftkleberdispersionen, enthaltend

40 -65 Gew.%, bezogen auf Dispersion, von Copolymerisaten entsprechend Anspruch 1 oder 2,
1,5- 8 Gew.%, bezogen auf Copolymerisate, von Emulgatoren und/oder Schutzkolloiden und
34 -59 Gew.%, bezogen auf Dispersion, an Wasser.

5. Verfahren zur Herstellung von Copolimerisaten entsprechend Anspruch 1, dadurch gekennzeichnet, daß

b) 30 -69 Gew.% Acrylsäureester von Alkoholen mit 4 bis 12 Kohlenstoffatomen,
c) 20 -55 Gew.% Vinylacetat,
d) 0,5- 8 Gew.% Monomeren der allgem. Formel

$$CH_2 = CR' - \overset{\overset{\displaystyle O}{\|}}{C} - N(R'')_2$$

e) 0 - 8 Gew.% weiterer olefinish ungesättigter und mit Wasser in beliebigem Verhältnis mischbarer oder monomerlöslicher oder mehrfach olefinisch ungesättigter Monomeren unter einem Äthylendruck von 20 bis 120 bar radikalisch bei 10 bis 100 °C in einem Druckgefäß polymerisiert werden.

6. Verfahren zur Herstellung von Copolymerisaten nach Anspruch 1 durch Polymerisation von

b) 30 -69 Gew.% Acrylsäureester,
c) 20 -55 Gew.% Vinylacetat,
d) 0,5- 8 Gew.% Monomereren der allgem. Formel

$$CH_2 = CR' - \overset{\overset{\displaystyle O}{\|}}{C} - N(R'')_2$$

e) 0 - 8 Gew.% weiterer olefinisch ungesättigter und mit Wasser in beliebigem Verhältnis mischbarer oder monomerlöslicher oder mehrfach olefinisch ungesättigter Monomeren in wäßriger Emulsion in Gegenwart von 1,5-8 Gew.% Emulgatoren und/oder Schutzkolloiden, bezogen auf Polymerisat, sowie Radikalbildnern unter einem Äthylendruck von 20 bis 120 bar und bei einer Temperatur von 10 bis 90 °C in einem Druckgefäß.

7. Verfahren nach Anspruch 6, dadurch gekennzeichnet, daß die Komponente d) vor Beginn der Polymerisation im Druckgefäß insgesamt vorgelegt wird.

**Claims**

1. A copolymerizate containing

a) from 10 to 30 % by weight of ethylene,
b) from 30 to 69 % by weight of acrylic acid esters of alcohols having from 4 to 12 carbon atoms,
c) from 20 to 55 % by weight of vinyl acetate,
d) from 0.5 to 8 % by weight of monomers having the general formula

$$CH_2 = CR' - \overset{\overset{\displaystyle O}{\|}}{C} - N(R'')_2$$

wherein R' is H or $CH_3$ and R" is H or an alkyl having from 1 to 3 carbon atoms, which is optionally substituted, and

e) from 0 to 8 % by weight of other olefinically-unsaturated monomers being miscible with water in any ratio or monomer-soluble or multiply olefinically-unsaturated monomers, said copolymerizate having a glass transition temperature of from − 20 to − 60 °C and a K-value according to Fikentscher, measured in tetrahydrofuran, of from 50 to 180.

2. Copolymerizates according to claim 1, characterized in that the component d) is acrylamide or methacrylamide.

3. Application of copolymerizates according to claim 1 or 2 in pressure-sensitive adhesives.

4. Aqueous pressure-sensitive adhesive dispersions containing

from 40 to 65 % by weight, based on the dispersion, of copolymerizates of claim 1 or 2,
from 1.5 to 8 % by weight, based on the copolymerizates, of Isifemuiers and/or protective colloids,
and
from 34 to 59 % by weight, based on the dispersion, of water.

5. Process for the production of copolymerizates according to claim 1, characterized in that

b) 30 to 69 % by weight of acrylic acid esters of alcohols having from 4 to 12 carbon atoms,
c) 20 to 55 % by weight of vinyl acetate,
d) 0.5 to 8 % by weight of monomers of the general formula

$$CH_2 = CR' - \overset{\overset{\displaystyle O}{\|}}{C} - N(R")_2$$

e) 0 to 8 % by weight of other olefinically-unsaturated monomers being miscible with water in any ratio or monomer-soluble or multiply olefinicallyunsaturated monomers are radically polymerized in a pressure vessel at an ethylene pressure of from 20 to 120 bar and at from 10 to 100 °C.

6. Process for the manufacture of copolymerizates according to claim 1 by the polymerization of

b) 30 to 69 % by weight of acrylic acid esters,
c) 20 to 55 % by weight of vinyl acetate,
d) 0.5 to 8 % by weight of monomers of the general formula

$$CH_2 = CR' - \overset{\overset{\displaystyle O}{\|}}{C} - N(R")_2$$

e) 0 to 8 % by weight of other olefinically-unsaturated monomers being miscible with water in any ratio or monomer-soluble or multiply olefinically-unsaturated monomers in an aqueous emulsion in the presence of from 1.5 to 8 % by weight of emulsifiers and/or protective colloids, based on the polymerizate, as well as radical-initiators at an ethylene pressure of from 20 to 120 bar and at a temperature of from 10 to 90 °C in a pressure vessel.

7. The process of claim 6, characterized in that the entire amount of component d) is present prior to the commencement of polymerization in the pressure vessel.

**Revendications**

1. Copolymère caractérisé en ce qu'il consiste en

a) 10 à 30 % en poids d'éthylène,
b) 30 à 69 % en poids d'esters de l'acide acrylique et d'alcools ayant 4 à 12 atomes de carbone,
c) 20 à 55 % en poids d'acétate de vinyle,
d) 0.5 à 8 % en poids de monomères de formule générale

$$CH_2 = CR' - \overset{\overset{\displaystyle O}{\|}}{C} - N(R")_2$$

(dans laquelle R' représente H ou $CH_3$ et R" représente H ou un alkyle ayant 1 à 3 atomes de carbone et éventuellement substitué),

e) 0 à 8 % en poids d'autres monomères à insaturation oléfinique, miscibles à l'eau en toutes proportions ou des monomères solubles dans des monomères ou des monomères comportant plusieurs insaturations oléfiniques, ayant une température de transition vitreuse comprise entre – 20 et – 60 °C et une valeur du coefficient K de l'équation de Fikentscher, mesurée dans du tétrahydrofuranne, comprise entre 50 et 180.

2. Copolymères selon la revendication 1, caractérisés en ce que le constituant d) est de l'acrylamide ou du méthacrylamide.

3. Application des copolymères selon l'une des revendications 1 et 2 dans un adhésif de contact.

4. Dispersions aqueuses d'adhésifs de contact, caractérisées en ce qu'elles contiennent

40 à 65 % en poids (par rapport à la dispersion) de copolymères selon la revendication 1 ou 2,
1,5 à 8 % en poids (par rapport aux copolymères) d'émulsifiants et/ou de colloïdes protecteurs, et,
34 à 59 % en poids (par rapport à la dispersion) d'eau.

5. Procédé de production de copolymères selon la revendication 1, caractérisé en ce qu'on polymérise à une température de 10 à 100 °C, dans un récipient capable de supporter une pression interne, sous une pression d'éthylène de 20 à 120 bars, par voie radicalaire

b) 30 à 69 % en poids d'esters d'acide acrylique et d'alcools comportant 4 à 12 atomes de carbone,

c) 20 à 55 % en poids d'acétate de vinyle,

d) 0,5 à 8 % de monomères de formule générale

$$CH_2 = CR' - \overset{O}{\overset{\|}{C}} - N(R'')_2$$

e) 0 à 8 % en poids d'autres monomères à insaturation éthylénique, miscibles à l'eau en toutes proportions ou des monomères solubles dans des monomères ou des monomères à plusieurs insaturations oléfiniques.

6. Procédé pour produire des copolymères selon la revendication 1, caractérisé en ce qu'on effectue sous une pression d'éthylène de 20 à 120 bars et à une température de 10 à 90 °C, dans un récipient capable de supporter une pression interne, la polymérisation de :

b) 30 à 69 % en poids d'un ester d'acide acrylique,

c) 20 à 55 % en poids d'acétate de vinyle,

d) 0,5 à 8 % en poids de monomères de formule générale

$$CH_2 = CR' - \overset{O}{\overset{\|}{C}} - N(R'')_2$$

e) 0 à 8 % en poids d'autres monomères à insaturation oléfinique et miscibles à l'eau en toutes proportions ou des monomères solubles dans des monomères ou des monomères comportant plusieurs insaturations oléfiniques, en émulsion aqueuse, en présence de 1,5 à 8 % en poids d'émulsifiants et/ou de colloïdes protecteurs, par rapport au polymère, ainsi qu'en présence de générateurs de radicaux libres.

7. Procédé selon la revendication 6, caractérisé en ce qu'on place dans le récipient pouvant supporter la pression la totalité du constituant d) avant le début de la polymérisation.